# EUROPEAN PATENT SPECIFICATION

(11) **EP 1 009 600 B1**
(45) Date of publication and mention of the grant of the patent: **02.04.2003**
(21) Application number: 98929967.2
(22) Date of filing: 08.06.1998
(51) Int. Cl.: B27B 33/06, B23D 61/12

(54) **IMPROVED BANDSAW**
VERBESSERTE BANDSÄGE
SCIE A RUBAN AMELIOREE

(30) Priority: 26.06.1997 SE 9702459
(43) Date of publication of application: 21.06.2000
(73) Proprietor: Kapman AB, 811 81 Sandviken (SE)
(72) Inventor: HAKAN, Hellbergh, Branford, CT 06405 (US)
(74) Representative: Johansson Webjörn, Ingmari
(86) International application number: PCT/SE98/01097
(87) International publication number: WO 99/000228

(56) References cited:
- GB-A- 2 173 735
- GB-A- 2 266 861
- SE-B- 447 883
- US-A- 4 727 788
- US-A- 5 603 252

## Description

### Background

Bandsaws have long been used for cutting of hard materials such as metal bars or profiles, their main advantage being that they can be made thinner that circular saws, thus wasting less material. They have some disadvantages that have restricted their use, however, since the bandsaw blade looses its torsional stiffness when the feed force is high. This means that many tooth shapes and arrangements have been suggested with the purpose of reducing the feed force and any force components that might twist the blade. Well known such tooth arrangements include having some teeth straight and longer than others to guide the tooth edge laterally, and letting teeth with unequal edge shapes cut thick but narrow chips known as the "triple chip" method.

Lateral forces on the toothed edge of the bandsaw may be minimized by letting such teeth that have large lateral forces occur in pairs with opposite setting. If the distance between teeth is small enough they will both be in the cut must of the time, and their individual lateral forces will cancel. However, small distance also means that a larger number of teeth will be cutting simultaneously, with a large feed force when cutting solid sections. which is not desirable, or small feed force on each tooth, which means inefficient cutting and excessive wear.

Another problem is the low in-plane stiffness for feed forces acting in unison, with a great risk of vibrations if many teeth at equal distances are cutting, causing chattering, noise and corrugations of the cut surfaces. On the other hand, if few teeth are cutting the lateral forces will not cancel.

These problems make it difficult to design an optimal bandsaw even for a well defined task, and even more so if the bandsaw is to be used for a variety of tasks involving different thickness and material.

Numerous tooth arrangements have been suggested and tried in order to make a bandsaw able to produce good surfaces in a variety of conditions. Differences in tooth height are used not only for lateral guidance, but also to let a few longer teeth do most of the cutting in hard materials still with a reasonable cutting depth, and having all teeth actively cutting in soft materials. Differences in tooth distances are used to avoid chattering and to locate teeth in pairs without getting too many cutting at the same time. Differences in setting are used to divide the kerf width into narrow chips with better thickness and controlled chip curling. Three set widths is traditional, unset-left-right, but five or more also occur, where lower teeth have larger set widths.

For rational production, the teeth should be arranged in recurrent groups, corresponding to the widths of grinding, milling and setting tools. Very long recurrent groups require large tools, large machines and large machining forces.

Many suggested tooth arrangements, such as in the patent US 4.727,788 include all three variations, but are then complicated and costly to manufacture. An example of another tooth arrangement is also known from US-A-4,727,788. The present invention is a tooth arrangement for metal handsaws which is equally useful for hard and soft materials, which causes less vibrations than previously known designs with that usage, and which still is simple to manufacture with adequate precision.

### Description

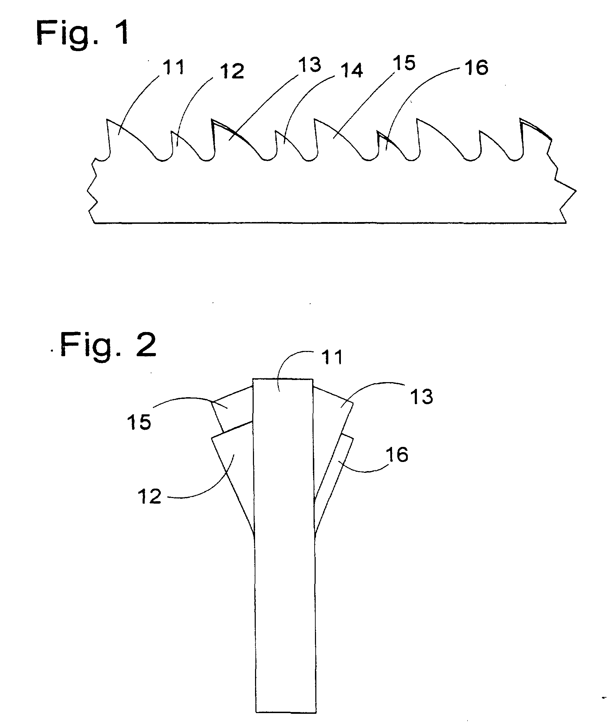

The invention is described with reference to the figures, where figure 1 shows a bandsaw blade from the side, and figure 2 a cross-section through the same.

The first operation in manufacture of bandsaw teeth is cutting teeth in the edge of a steel strip by grinding or blanking. The teeth can have different height and different pitch distance. According to the present invention, different height is important, different pitch is optional for special materials. If the steel strip is made of two alloys, as is commonly the case, the tips of the teeth will consist of a harder alloy such as high-speed steel, while the body and back of the strip is made of a tough crack-resistant steel alloy. In many cases, however, tips of tungsten carbide are welded onto the teeth, to get even higher hardness. The teeth are then set by knocking or pressing them to either side, or leaving some unset. Many setting patterns include teeth set to different width which is very difficult to achieve in practice, but according to an embodiement of the invention only one setting width is used. Many patterns combining different tooth heights, pitches and setting widths comprise a large number of teeth in a recurrent group, which is one reason why it is difficult to do the setting with high precision, and also requires more expensive tooling. According to an embodiement of the invention, the long recurrent group is achieved by combining a short group for height and pitch with another short group for setting, where the groups have incommensurable number of members. The long group will then have as many members as the product of the members of the smaller groups.

Figure 1 shows a part of a bandsaw blade according to the invention, where the teeth of a long recurrent group of six teeth are marked (11-16). The group is the result of a tooth height and pitch group of two teeth, one high and one low (H-L), and a setting group of three teeth, one unset, one right and one left (O-R-L). As is common with saw blades for metal, the front rake face of every tooth is normal to the blade sides. The first tooth in the group (11) is high and unset, the second tooth (12) is low and set right, the third tooth (13) is high and set left. the fourth tooth (14) is low and unset, the fifth tooth (15) is high and set right, the sixth tooth (15) is low and set left. No two teeth in this group of six (HO - LR - HL - LO - HR - LL ) have the same combination of height and setting, and each of the six possible combinations of the two height alternatives and three settings occurs once.

When cutting hard materials and large sections, only the high teeth cut, and as they are located with equal distance, the saw blade will function as a blade with coarse but even pitch, with equal tooth loading and low vibration level, and the teeth will cut to adequate depth. There is, however, one great improvement, since according to the invention the low set teeth between the high teeth are set with the same setting width as the high teeth. shown in figure 2, and will then slide against the kerf sides without cutting, thereby stabilizing the saw blade laterally and suppressing any tendency for lateral vibrations which otherwise occur where a cutting tooth enters or leaves the kerf, and which otherwise create copies of the work piece contour lines.

When cutting softer materials and thinner sections, the feed can be great enough to let all six teeth cut, although initially with smaller cutting depth for the low teeth. If the pitch distance is smaller in front of a high tooth, and larger in front of a low tooth, the cutting depth and tooth wear will soon become more equal between high and low teeth, with optimal durability for saw blades in this application.

Although described above with a tooth height and pitch group of two and a setting group of three, the invention can be realized with other incommensurable tooth numbers, such as three/four, and the height and pitch group need not be the one with lesser number of teeth. Examples of recurring tooth height groups are high-low or high-low-low or high-low-medium, and examples of setting groups are ORL, or OROL. Excepting th e case mentioned with a tooth height group of two and a setting group of three, the number of teeth in the recurrent group may exceed the number of possible combinations of height and setting, and thus some teeth in the group will have the same combination, although with different sequence of neighbors. However, the balance between right and left will always be maintained, whether the feed is so slow that only high teeth cut, or larger so that low teeth cut a depth which is a certain fraction of what the high teeth do.

In a tooth height group, the height difference should be enough to avoid any cutting action with set low teeth when cutting hard materials, which for most saw dimensions means that low teeth should be at least 0.1 mm lower than high teeth before setting. It will also be possible within the invention to use a tooth height group with three levels. such as High-Low-Medium.

## Claims

1. Bandsaw blade with teeth arranged in recurrent groups, where each tooth has a height of either high or low, and a setting variation of either right, left or unset, having tooth height variations being in subgroups of two members, where a high tooth is followed by a low tooth, **characterized by** having setting variations in subgroups of three members, one straight, one set to the right and one set to the left, and the number of teeth in the recurrent group being six, where all set teeth have the same setting width regardless of height.

2. Bandsaw blade according to claim 1, where low teeth are at least 0.1 mm lower than high teeth before setting.

3. Bandsaw blade with teeth arranged in recurrent groups, where each tooth has a height of either high, medium or low, and a setting variation of either right, left or unset, **characterized by** having tooth height variations in subgroups of three members, and having setting variations in subgroups of four members including two straight, and the number of teeth in the recurrent group being twelve.

## Patentansprüche

1. Band für Bandsägen mit Zähnen, die in periodischen Gruppen angeordnet sind, wobei jeder Zahn entweder eine hohe oder eine niedrige Höhe hat und eine Variation in der Verschränkung von entweder rechts, links oder unverschränkt, mit Zahnhöhenvariationen, die in Untergruppen aus zwei Elementen bestehen, wobei ein niedriger Zahn auf einen hohen Zahn folgt, **dadurch gekennzeichnet, daß** die Verschränkungsvariationen in Untergruppen aus drei Elementen bestehen, einen geraden, einen nach rechts verschränkten und einen nach links verschränkten Zahn und die Anzahl von Zähnen in der periodischen Gruppe sechs ist, wobei alle verschränkten Zähne ungeachtet der Höhe dieselbe Verschränkungsgröße haben.

2. Band für Bandsägen nach Anspruch 1, wobei die niedrigeren Zähne vor der Verschränkung zumindest 0,1 mm tiefer als die hohen Zähne sind.

3. Band für Bandsägen mit Zähnen, die in periodischen Gruppen angeordnet sind, wobei jeder Zahn eine Höhe von entweder hoch, mittel oder niedrig hat und eine Verschränkungsvariation von entweder rechts, links oder nicht verschränkt, **dadurch gekennzeichnet, daß** die Zahnhöhenvariationen in Untergruppen aus drei Elementen bestehen und eine Verschränkungsvariation in Untergruppen von vier Elementen hat einschließlich zweier gerader Zähne und die Anzahl von Zähnen in der periodischen Gruppe zwölf ist.

## Revendications

1. Lame de scie à ruban à dents disposées par groupes récurrents, dans laquelle chaque dent présente une hauteur élevée ou basse, et une variation d'inclinaison vers la droite, vers la gauche ou une absence d'inclinaison, présentant des variations de hauteur de dent selon des sous-groupes de deux éléments, dans lesquels une dent élevée est suivie par une dent basse, **caractérisée par le fait qu'**elle présente des variations d'inclinaison en sous-groupes de trois éléments, l'un droit, l'un incliné à droite et l'un incliné à gauche, et le nombre de dents dans le groupe récurrent étant de six, toutes les dents inclinées ayant le même déport d'inclinaison indépendamment de la hauteur.

2. Lame de scie à ruban selon la revendication 1, dans laquelle les dents basses sont plus basses d'au moins 0,1 mm que les dents hautes avant d'être inclinées.

3. Lame de scie à ruban à dents disposées par groupes récurrents, dans laquelle chaque dent présente une hauteur élevée, moyenne ou basse, et une variation d'inclinaison vers la droite, vers la gauche ou une absence d'inclinaison, **caractérisée par le fait qu'**elle présente des variations de hauteur de dent selon des sous-groupes de trois éléments, et ayant des variations d'inclinaison en sous-groupes de quatre éléments comprenant deux éléments droits, et le nombre de dents dans le groupe récurrent étant de douze.
